# EUROPEAN PATENT SPECIFICATION

(11) **EP 3 170 547 B1**
(45) Date of publication and mention of the grant of the patent: **31.03.2021**
(21) Application number: 15822300.8
(22) Date of filing: 17.07.2015
(51) Int. Cl.: B01D 53/50, C01F 11/46, B01D 53/80, C04B 11/02, C04B 11/26, F23J 15/04

(54) **FLUE GAS DESULFURIZATION APPARATUS AND METHOD OF OPERATING SAME**
RAUCHGASENTSCHWEFELUNGSVORRICHTUNG UND VERFAHREN ZU IHREM BETRIEB
APPAREIL DE DÉSULFURATION DE GAZ DE COMBUSTION ET SON PROCÉDÉ DE FONCTIONNEMENT

(30) Priority: 17.07.2014 JP 2014146613
(43) Date of publication of application: 24.05.2017
(73) Proprietor: Mitsubishi Power, Ltd., Yokohama (JP)
(72) Inventor: II, Shinya, Yokohama-shi Kanagawa 220-8401 (JP); KATAGAWA, Atsushi, Yokohama-shi Kanagawa 220-8401 (JP); ISHIZAKA, Hiroshi, Yokohama-shi Kanagawa 220-8401 (JP); SHIMAMURA, Jun, Yokohama-shi Kanagawa 220-8401 (JP)
(74) Representative: Henkel & Partner mbB
(86) International application number: PCT/JP2015/070509
(87) International publication number: WO 2016/010135

(56) References cited:
- EP-A1- 0 652 039
- CN-A- 1 164 435
- JP-A- H0 557 140
- JP-A- H1 157 395
- JP-A- H09 253 443
- JP-A- H11 197 449
- JP-A- H11 197 450
- JP-A- 2004 321 868
- JP-A- 2011 177 615
- US-A- 4 526 764
- US-A- 5 770 166

## Description

### [Technical Field]

The present invention relates to a flue gas desulfurization system for purifying an exhaust gas discharged from a combustion equipment such as a boiler installed in a thermal power plant or factory, and more particularly to a flue gas desulfurization apparatus capable of reducing a pump consumption power required to operate a desulfurization apparatus, and a method of operating the same.

### [Background Art]

As a means for removing sulfur oxides contained in a flue gas discharged from a boiler, and the like in a thermal power plant, a wet lime gypsum method is widely used. As a system for performing flue gas desulfurization treatment including the wet lime gypsum method on a boiler flue gas, for example, a desulfurization system disclosed in Japanese Patent Application Publication No. 2011-177615 (Patent Document 1) is known in the art.

In the desulfurization system, a gypsum slurry generated in a desulfurization equipment is conveyed to a dehydration apparatus by using a pump, is separated into a gas and a liquid in the dehydration apparatus, and gypsum solids are extracted.

The sulfur oxides contained in the flue gas come into contact with an absorbing solution containing limestone to become gypsum, are conveyed to a dehydration equipment directly or via a tank in which the absorbing solution is stored by the pump, and are extracted as a gypsum slurry.

On the other hand, since the gypsum slurry generally has a high solid content concentration from 15 to 30%, and the gypsum itself has high sedimentation properties, the slurry has properties of being easily deposited and settled. Therefore, when transporting the gypsum slurry, maintaining a flow rate of the gypsum slurry in the slurry pipe is required. However, in consideration of a problem of wearing the pipe, etc. due to coexisting impurities, the system is generally operated at a flow rate of 1 to 3 m/sec.

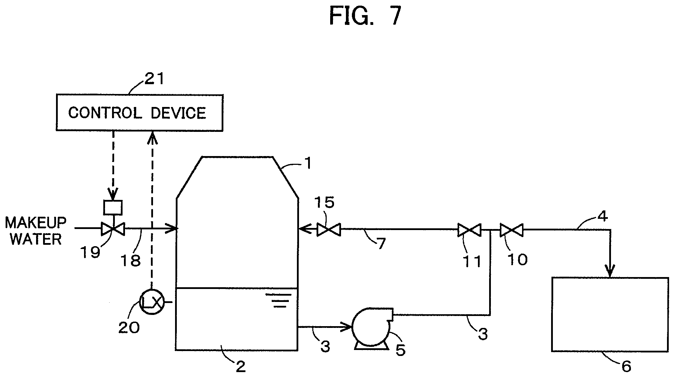

A conventional desulfurization system known in the art is illustrated in FIG 7.

In this desulfurization system, even when the amount of generated gypsum is decreased at the time of a low load in the boiler, in order to maintain the flow rate in the pipe, a circulation pipe 7, which is branched from a gypsum slurry pipe 3 for supplying a gypsum slurry 2 from an absorption tower 1 to a gypsum slurry tank 6 or the dehydration equipment, is installed to return the slurry to the absorption tower 1. The circulation pipe 7 is designed so that the gypsum slurry 2 flows therein at all times. For example, according to the amount of the gypsum slurry supplied to the gypsum slurry tank 6 through a gypsum slurry supply pipe adjustment valve, the amount of gypsum slurry flowing in the circulation pipe 7 is fluctuated. On the other hand, since a capacity of a gypsum slurry conveying pump 5 is constant, the flow rate of the gypsum slurry flowing through the gypsum slurry pipe portion (common pipe) 3 before branching to the circulation pipe 7 becomes constant. Table 1 below illustrates an example of the slurry flow rate. Further, among the gypsum slurry pipes after the branch, a portion, which is connected to the gypsum slurry pipe portion (common pipe) 3 before branching to the circulation pipe 7 so as to communicate the gypsum slurry to the gypsum slurry tank 6, is referred to as a gypsum slurry supply pipe 4.

**[TABLE 1]**

| | At the time of normal load | At the time of low load |
|---|---|---|
| Slurry flow rate flowing in the common pipe | 160% | 160% |
| Slurry flow rate flowing in the circulation pipe | 60% | 110% |
| Slurry flow rate flowing in the supply pipe | 100% | 50% |

When there is a need to reduce the gypsum slurry 2 to be supplied to the gypsum slurry tank 6 at the time of the low load of the boiler, the flow rate of the gypsum slurry 2 is decreased by adjusting an opening degree of the flow rate control valve 10 provided in the gypsum slurry supply pipe 4, thereby the gypsum slurry 2 flowing in the circulation pipe 7 is increased.

On the other hand, also at the time of a normal load of the boiler, it is necessary for the gypsum slurry 2 to continuously flow to the circulation pipe 7 at all times. Therefore, there is a need to add an amount of the gypsum slurry to be flowed to the circulation pipe 7 to the capacity of the gypsum slurry conveying pump, in addition to the required amount supplied to the gypsum slurry tank 6.

As described above, even if the load of the boiler is changed, when operating the gypsum slurry conveying pump 5 in a state of allowance with the capacity thereof being constantly maintained, there is a waste in power consumption.

In addition, an invention disclosed in Japanese Patent Application Publication No. H11-197450 (Patent Document 2) discloses that the amount of makeup water supplied to the absorbing solution is controlled, so as to constantly maintain the concentration of the absorbing solution (gypsum slurry) in the absorbing solution tank.

Furthermore, Chinese Patent Application Publication No. 1 164 435 (Patent Document 3) discloses a method of concentrating and discharging an absorption material out of a flue gas desulfurization system. The method comprises operating a flue gas desulfurization apparatus in which a gypsum slurry extracted from an absorbing liquid slurry tank disposed at a lower portion of an absorption tower is circulated back to the absorption tower when the concentration of gypsum in the gypsum slurry is below a predetermined value, and is discharged out of the system when the concentration of gypsum in the gypsum slurry is above the predetermined value.

### [Citation List]

### [Patent Literature]

[Patent Document 1] Japanese Patent Application Publication No. JP 2011-177615 A
[Patent Document 2] Japanese Patent Application Publication No. JP H11-197450 A
[Patent Document 3] Chinese Patent Application Publication No. CN 1 164 435 A

### [Summary of Invention]

### [Technical Problem]

In the invention described in Patent Literature1, in order to transport the gypsum slurry 2, there is a need to operate the gypsum slurry conveying pump 5 for conveying the gypsum slurry by increasing the capacity of the gypsum slurry conveying pump for conveying the gypsum slurry. There is a problem that the power consumption should be increased in order to increase the pump capacity. Further, in the invention described in Patent Literature 2, the problem entailed in the pump capacity at the time of the low load in the boiler is not disclosed.

It is an object of the present invention to provide a flue gas desulfurization apparatus capable of reducing a capacity of a pump as much as possible for supplying a gypsum slurry obtained by oxidizing a limestone slurry generated by bringing an absorbing solution and a flue gas into contact with each other in an absorption tower for flue gas desulfurization to gypsum slurry tank to reduce power consumption, and a method of operating the same. The invention is defined by the claims.

### [Solution to Problems]

The above object is achieved by the following aspects of the invention.

In a first aspect, the present invention relates to a method of operating a flue gas desulfurization apparatus as defined in claim 1. In this method, a gypsum slurry (2) containing gypsum obtained by bringing sulfur oxides contained in a flue gas discharged from a combustion device including a boiler into contact with an absorbing solution containing a limestone slurry in an absorption tower (1), and oxidizing the same, is extracted from the absorption tower (1), and by using a pump (5), the gypsum slurry (2) is supplied to a gypsum slurry tank (6, 23) for supplying the gypsum slurry (2) to a dehydration equipment, or is circulated to the absorption tower (1), the method including the steps of:
performing an operation of supplying the gypsum slurry (2) only to the gypsum slurry tank (6, 23) and an operation of circulating the gypsum slurry only to the absorption tower (1) by switching therebetween, wherein the switching is controlled depending on a solid content concentration of the gypsum slurry (2), and
when switching to the operation of supplying the gypsum slurry (2) only to the gypsum slurry tank (6, 23), washing a circulation pipe (7) configured to circulate the gypsum slurry (2) to the absorption tower (1),
wherein the gypsum slurry (2) is supplied to the gypsum slurry tank (6, 23) via a gypsum slurry supply pipe (4) having a gradient such that the gypsum slurry (2) flows into the gypsum slurry tank (6, 23) by gravity.

In a second aspect, the present invention relates to a flue gas desulfurization apparatus as defined in claim 3. The flue gas desulfurization apparatus includes:
an absorption tower (1);
a gypsum slurry tank (6, 23) configured to extract and store a gypsum slurry (2) generated by bringing sulfur oxides contained in a flue gas and an absorbing solution containing a limestone slurry into contact with each other in the absorption tower (1);
a gypsum slurry common pipe (3) configured to convey the gypsum slurry extracted from the absorption tower (1);
a gypsum slurry supply pipe (4) connected to the gypsum slurry common pipe (3) and configured to supply the gypsum slurry (2) to the gypsum slurry tank (6, 23) by gravity, the gypsum slurry supply pipe (4) having a gradient;
a gypsum slurry circulation pipe (7) configured to circulate and supply the gypsum slurry (2) provided at a connection part between the gypsum slurry common pipe (3) and the gypsum slurry supply pipe (4) to the absorption tower (1);
a washing water pipe (9) connected to the gypsum slurry circulation pipe (7) to supply washing water to the gypsum slurry circulation pipe (7);
a flow passage opening/closing valve (10) provided in the gypsum slurry supply pipe (4);
a flow passage opening/closing valve (11) provided in the gypsum slurry circulation pipe (7);
a flow passage opening/closing valve (12) provided in the washing water pipe (9);
a makeup water pipe (18) configured to supply makeup water to the absorption tower (1);
a flow passage opening/closing valve (19) provided in the makeup water pipe (18); and
a liquid level gauge (20) configured to measure a liquid level of the gypsum slurry (2) in the absorption tower (1), the apparatus further including:
   a gypsum slurry pump (5) configured to feed the gypsum slurry (2) to the gypsum slurry supply pipe (4) side and a gypsum slurry densimeter (17), which are respectively provided in the gypsum slurry common pipe (3); and
   a control device (21) configured to control opening/closing of the flow passage opening/closing valves (10, 11, 12, 19) based on values measured by the gypsum slurry densimeter (17) and the liquid level gauge (20).

In a third aspect, the present invention relates to a flue gas desulfurization apparatus as defined in claim 5. The flue gas desulfurization apparatus includes:
an absorption tower (1);
a gypsum slurry tank (6, 23) configured to extract and store a gypsum slurry (2) generated by bringing sulfur oxides contained in a flue gas and an absorbing solution containing a limestone slurry into contact with each other in the absorption tower (1);
a gypsum slurry common pipe (3) configured to convey the gypsum slurry (2) extracted from the absorption tower (1);
a gypsum slurry supply pipe (4) connected to the gypsum slurry common pipe (3) and configured to supply the gypsum slurry to the gypsum slurry tank (6, 23) by gravity, the gypsum slurry supply pipe (4) having a gradient;
a washing water pipe (9) configured to supply washing water to the gypsum slurry common pipe (3) on an upstream side from a connection part with the gypsum slurry supply pipe (4);
a flow passage opening/closing valve (12) provided in the washing water pipe (9);
a flow passage opening/closing valve (25) provided in the gypsum slurry common pipe (3);
a flow passage opening/closing valve (10) provided in the gypsum slurry supply pipe (4); and
a gypsum slurry pump (5) configured to feed the gypsum slurry (2) to the gypsum slurry supply pipe (4) side and a gypsum slurry densimeter (17), which are provided in the gypsum slurry common pipe (3), the apparatus further including:
   a drain pipe (26) connected to the upstream side of the gypsum slurry common pipe (3) from the connection part with the gypsum slurry supply pipe (4);
   a pipe flow passage opening/closing valve (27) provided in the drain pipe (26);
   a drain pit (29) into which drain containing the gypsum slurry (2) from the drain pipe (26) flows;
   a drain supply pipe (31) configured to supply the drain from the drain pit (29) to the absorption tower (1);
   a drain water pump (32) provided in the drain supply pipe (31);
   a makeup water pipe (18) configured to supply makeup water to the absorption tower (1);
   a flow passage opening/closing valve (19) provided in the makeup water pipe (18);
   a liquid level gauge (20) provided in the absorption tower (1) to measure a liquid level of the gypsum slurry (2) therein; and
   a control device (21) configured to control opening/closing of the pipe flow passage opening/closing valves (10, 12, 19, 25, 27) based on values measured by the gypsum slurry densimeter (17) and the liquid level gauge (20).

### [Advantageous Effects of Invention]

In accordance with the inventions according to the first, second and third aspect of the present invention, the operation of supplying the gypsum slurry (2) only to the gypsum slurry tank (6) and the operation of circulating the gypsum slurry (2) only to the absorption tower (1) are performed by switching therebetween, such that it is possible to reduce the pump capacity for conveying the gypsum slurry and the power consumption thereof.

Moreover, by controlling switching between the operation of supplying the gypsum slurry (2) only to the gypsum slurry tank (6) and the operation of circulating the gypsum slurry (2) only to the absorption tower (1) depending on the solid content concentration of the gypsum slurry (2), it is possible to secure a constant flow rate in the pipe at all times, regardless of the amount of sulfur oxides in the boiler flue gas.

Moreover, by washing the circulation pipe (7) configured to circulate the gypsum slurry (2) to the absorption tower (1) at the time of switching to the operation of supplying the gypsum slurry (2) only to the gypsum slurry tank (6), it is possible to prevent a deposition of the slurry.

Moreover, a water balance of the desulfurization apparatus becomes transiently unstable due to the washing water being flowed into the circulation pipe, as well as, a desulfurization performance could be decreased due to the solid content concentration of the slurry in the absorption tower being decreased. However, by incorporating the amount of washing water into the makeup water control system, it is possible to smoothly operate the flue gas desulfurization apparatus.

### [Brief Description of Drawings]

FIG. 1 is a view illustrating a system of a flue gas desulfurization apparatus according to a first embodiment of the present invention.
FIG. 2 is a view illustrating a relationship between an operation state in which an operation of supplying a gypsum slurry from an absorption tower of the flue gas desulfurization apparatus of FIG. 1 to an outside and a circulation operation of returning the gypsum slurry to the absorption tower are switched and a solid content concentration.
FIG. 3 is a view illustrating an adjustment example of a makeup water amount in the absorption tower of the flue gas desulfurization apparatus of FIG. 1.
FIG. 4 is a view illustrating a system of a flue gas desulfurization apparatus according to a second embodiment of the present invention.
FIG. 5 is a view illustrating a system of a flue gas desulfurization apparatus according to a third embodiment of the present invention.
FIG. 6 is a view illustrating a system of a flue gas desulfurization apparatus according to a fourth embodiment of the present invention.
FIG. 7 is a view illustrating a system of a flue gas desulfurization apparatus in the related art.
FIG. 8 is a view illustrating an adjustment example of makeup water amount in an absorption tower of a flue gas desulfurization apparatus in the related art.

### [Description of Embodiments]

Hereinafter, embodiments of the present invention will be described in detail with reference to the accompanying drawings.

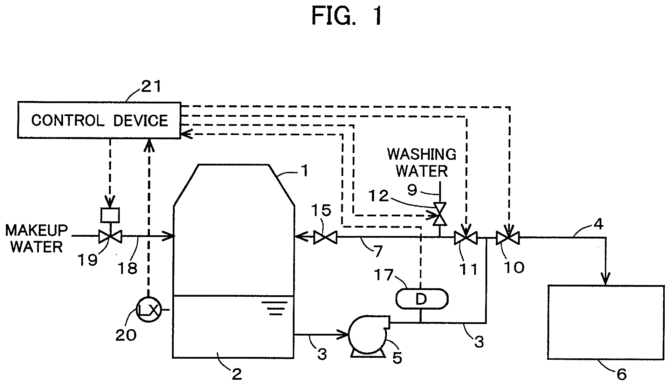

FIG. 1 illustrates a first embodiment of a flue gas desulfurization apparatus of the present invention. The flue gas desulfurization apparatus is an apparatus using a wet limestone gypsum method, in which gypsum generated by bringing sulfur oxides contained in a flue gas discharged from a combustion apparatus including a boiler into contact with an absorbing solution containing a limestone slurry in an absorption tower 1, and oxidizing the limestone slurry in the absorbing solution is removed as a gypsum slurry.

The configuration illustrated in FIG. 1 includes: a gypsum slurry conveying system which supplies a gypsum slurry 2 generated in the absorption tower 1 to a gypsum slurry tank 6 for supplying the gypsum slurry to a dehydration equipment (not illustrated) via a common pipe 3 and a gypsum slurry supply pipe 4 connected to the common pipe 3, using a gypsum slurry blow down pump 5 for extracting the gypsum slurry from the absorption tower 1 to the common pipe 3; and a gypsum slurry circulation system including a circulation pipe 7 connected to the common pipe 3 for circulating the gypsum slurry to the absorption tower 1, and a washing water pipe 9 for supplying washing water to the circulation pipe 7.

Flow passage shutoff valves 10, 11 and 12 are disposed in the gypsum slurry supply pipe 4, the circulation pipe 7 and the washing water pipe 9, respectively, and a gypsum slurry densimeter 17 is disposed in the common pipe 3. Opening degrees of the flow passage shutoff valves 10 and 11 are determined depending on a value of the gypsum slurry concentration measured by the concentration meter 17. Further, a flow passage shutoff valve 15 is disposed at an outlet side of the circulation pipe 7, that is, at an inlet side of the absorption tower 1.

Further, the absorption tower 1 is connected with a makeup water pipe 18 for supplying makeup water, and a flow passage shutoff valve 19 is disposed in the makeup water pipe 18. The absorption tower 1 is also provided with a liquid level gauge 20 for measuring a liquid level of the gypsum slurry therein.

In addition, it is configured that a control device 21 controls opening and closing degrees of the flow passage shutoff valves 10, 11, 12, 19, respectively, based on values measured by the gypsum slurry densimeter 17 of the common pipe 3 and the gypsum slurry liquid level gauge 20 in the absorption tower 1.

When a solid content of the gypsum slurry 2 in the absorption tower 1 is increased, an operation of feeding the gypsum slurry 2 to the gypsum slurry supply pipe 4 is performed. However, in this case, the gypsum slurry 2 extracted from the absorption tower 1 is introduced into the gypsum slurry tank 6 via the common pipe 3, the extracting pump 5 and the gypsum slurry supply pipe 4 in this order. At this time, the gypsum slurry circulation pipe valve 11 in the circulation pipe 7 is closed, and the gypsum slurry 2 does not flow into the gypsum slurry circulation pipe 7. In addition, the gypsum slurry 2 in the gypsum slurry supply pipe 4 flows into the gypsum slurry tank 6 by gravity due to a gradient of the gypsum slurry supply pipe 4.

When the solid content in the absorption tower 1 is decreased, and a circulation operation of the gypsum slurry 2 using the circulation pipe 7 is performed, the gypsum slurry supply pipe valve 10 is closed, and the gypsum slurry circulation pipe valve 11 is opened, such that an operation of circulating and supplying the gypsum slurry 2 to the circulation pipe 7 is performed.

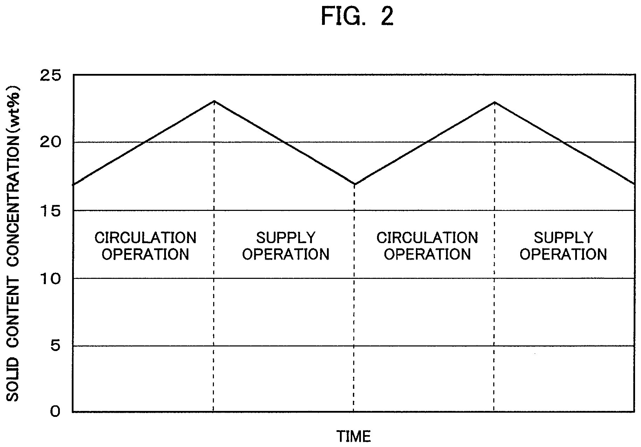

Table 2 below and FIG. 2 illustrate an example of the set value of the solid content concentration of the gypsum slurry, in which an operation (supply operation) of feeding the gypsum slurry 2 from the gypsum slurry supply pipe 4 to the gypsum slurry tank 6 and an operation (circulation operation) of returning the gypsum slurry 2 to the absorption tower 1 using the circulation pipe 7 are switched.

**[TABLE 2]**

| | Switch to Circulation Operation | Switch to Supply Operation |
|---|---|---|
| Solid Content Concentration | 17wt% | 23wt% |

When the circulation operation of the gypsum slurry to the absorption tower 1 is switched to the supply operation to the gypsum slurry tank 6, in order to wash the gypsum slurry 2 remaining in the gypsum slurry circulation pipe 7, first, the valve 12 in the washing water pipe 9 is opened, thus to wash an inside of the circulation pipe 7 with washing water. At this time, in order to prevent a large amount of the gypsum slurry 2 and washing water from entering into the absorption tower 1 and prevent a water balance and the solid content concentration of the gypsum slurry 2 in the absorption tower 1 from becoming unstable, the amount of makeup water flowing into the absorption tower 1 can be adjusted in advance by the control device 21 so that the opening degree of the valve 19 in the makeup water pipe 18 may be adjusted depending on the flow rate in the washing water pipe 9.

After a prescribed amount of washing water flows into the gypsum slurry circulation pipe 7, the gypsum slurry circulation pipe valve 11, the washing water pipe valve 12 and a circulation pipe outlet valve 15 are closed, and the washing water is held in the gypsum slurry circulation pipe 7.

On the other hand, when the supply operation is switched to the circulation operation, the washing water held in the gypsum slurry circulation pipe 7 suddenly flows into the absorption tower 1. At this time, similar to the above-described operation, the adjustment of the flow rate control valve 19 in the makeup water pipe 18 is performed by the control device 21, thus to control the amount of makeup water flowing into the absorption tower 1.

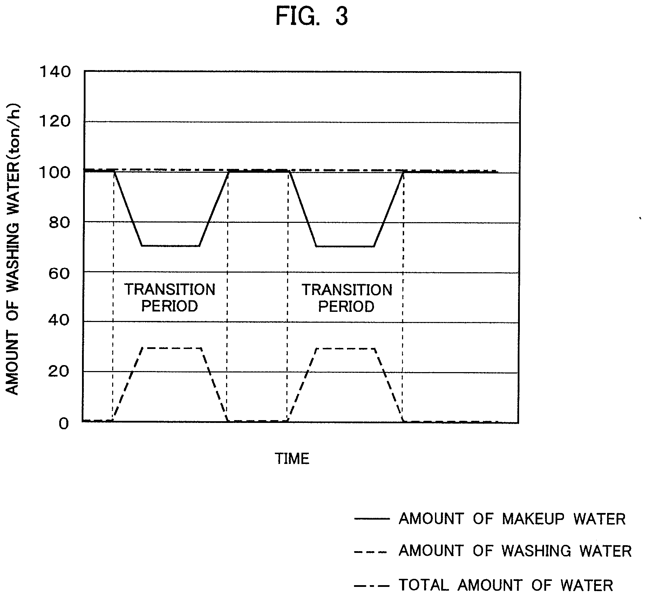

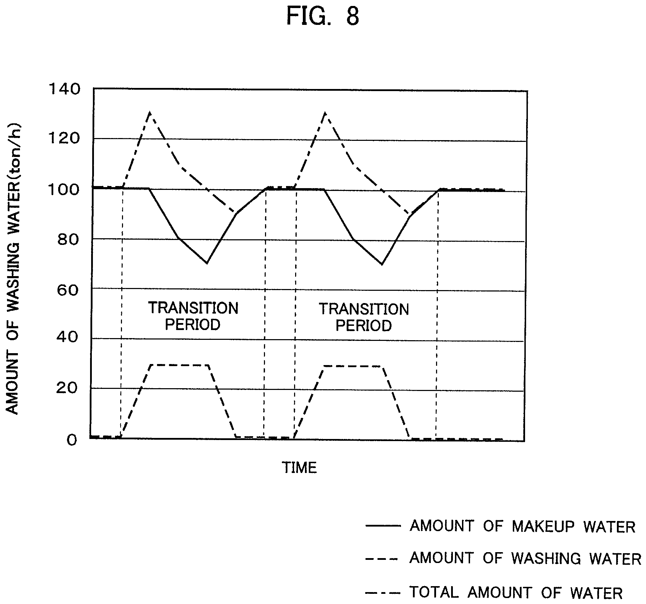

FIG. 8 illustrates a control example of a conventional makeup water amount, and FIG. 3 illustrates a control example in which the amount of washing water of the present embodiment is incorporated in the adjustment of the makeup water amount.

In the case of the conventional adjustment of the makeup water amount, when an amount of washing water flows into the absorption tower 1, the adjustment by the amount of makeup water cannot keep up, and a total water amount of the makeup water amount and the washing water amount are transiently increased and decreased, such that the operation state of the absorption tower 1 becomes unstable.

On the other hand, in the adjustment example illustrated in FIG. 3, when the amount of makeup water is adjusted, the total water amount (total water amount of the makeup water amount and the washing water amount) may be made constant by subtracting the washing water amount from the makeup water amount in advance, and thereby it is possible to maintain a stable operation state.

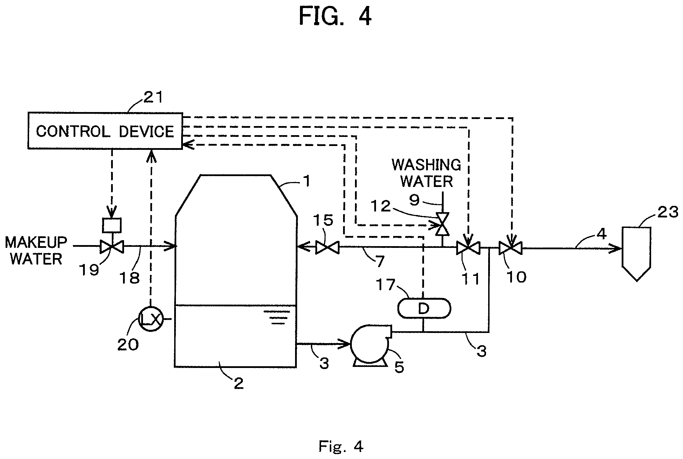

FIGS. 4, 5 and 6 illustrate other embodiments of a flue gas desulfurization apparatus of the present invention, respectively.

According to the flue gas desulfurization apparatus illustrated in FIG. 4, in the system of the flue gas desulfurization apparatus illustrated in FIG. 1, a supply destination of the gypsum slurry 2 is replaced from the gypsum slurry tank 6 to a hydrocyclone 23. In the conventional desulfurization system, a valve in an element inlet of the hydrocyclone is manually operated, and the gypsum slurry 2 flows into the element at all times during a normal operation, and the valve switching is not performed.

In the case of the present embodiment, the gypsum slurry supply pipe valve 10 in the element inlet uses an automatic valve, and the gypsum slurry supply pipe valve 10 is closed at the time of the circulation operation, thereby the stable operation can be performed while reducing the power of the extracting pump 5.

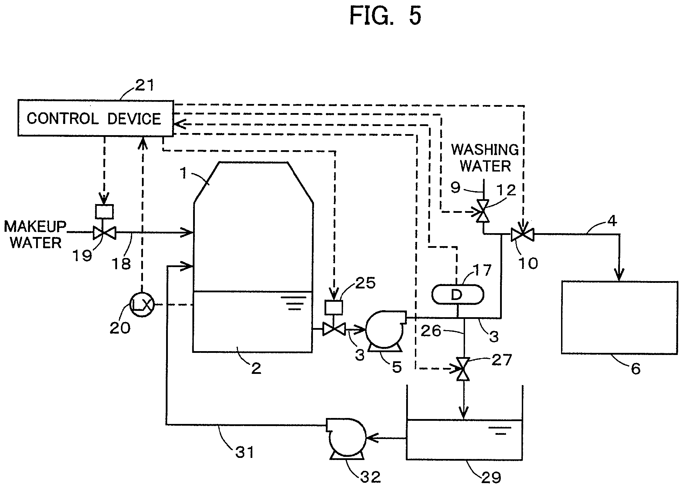

The flue gas desulfurization apparatus illustrated in FIG. 5 has a configuration in which the gypsum slurry circulation pipe 7 illustrated in FIG. 1 is eliminated, and the pump 5 is stopped at the time of taking out the gypsum slurry 2 generated in the absorption tower 1 from the common pipe 3 and circulating and supplying the same into the absorption tower 1, thus to wash the common pipe 3.

That is, in the flue gas desulfurization apparatus illustrated in FIG. 5, when the solid content in the absorption tower 1 is increased, and performing the operation of feeding the gypsum slurry to the gypsum slurry supply pipe 4, the gypsum slurry conveyed from the absorption tower 1 is introduced into the gypsum slurry tank 6 via the common pipe 3, the gypsum slurry blow down pump 5 and the gypsum slurry supply pipe 4 in this order.

The common pipe 3 which is an outlet of the absorption tower 1 is provided with the gypsum slurry blow down pump 5, the common pipe 3 on an inlet side of the pump 5 is provided with a gypsum slurry blow down valve 25, and the common pipe 3 on an outlet side of the pump 5 is provided with a gypsum slurry densimeter 17. In addition, it is configured that the common pipe 3 is connected to the gypsum slurry supply pipe 4 provided with a gypsum slurry supply pipe valve 10, and the gypsum slurry 2 is supplied from the gypsum slurry supply pipe 4 to the gypsum slurry tank 6.

In addition, it is configured that the gypsum slurry supply pipe 4 on an upstream side from an installation part of the gypsum slurry supply pipe valve 10 is connected with a washing water pipe 9 provided with a washing water pipe valve 12, and when the valve 12 is opened, the washing water is introduced into the common pipe 3. Further, it is configured that the common pipe 3 on the outlet side of the pump 5 is connected with a drain pipe 26, and the drain pipe 26 is provided with a drain valve 27 for extracting the gypsum slurry, and drain from the drain pipe 26 flows into a drain pit 29.

Further, a drain supply pipe 31 is disposed to supply the drain containing the gypsum slurry 2 from the drain pit 29 to the absorption tower 1, and a drain water pump 32 is disposed in the drain supply pipe 31.

In the above-described configuration, when the gypsum slurry blow down pump 5 is stopped, the gypsum slurry supply pipe valve 10 provided in the gypsum slurry supply pipe 4 and the absorption tower extracting valve 25 installed in the common pipe 3 are closed, and the valve 27 of the drain pipe 26 provided in the common pipe 3 on the outlet side of the pump 5 is opened, and further the washing water pipe valve 12 in the washing water pipe 9 is opened, such that the washing water from the washing water pipe 9 is temporarily stored in the drain pit 29 together with the gypsum slurry 2 in the common pipe 3 through the drain pipe 26. By this, the gypsum slurry 2 in the common pipe 3 is removed to the outside.

The gypsum slurry in the drain pit 29 is returned to the absorption tower 1 from the drain supply pipe 31 by using the drain pump 32. Since it is difficult to start and stop the pump frequently, by stopping the pump 5 during the circulation operation, the pump power may be further reduced.

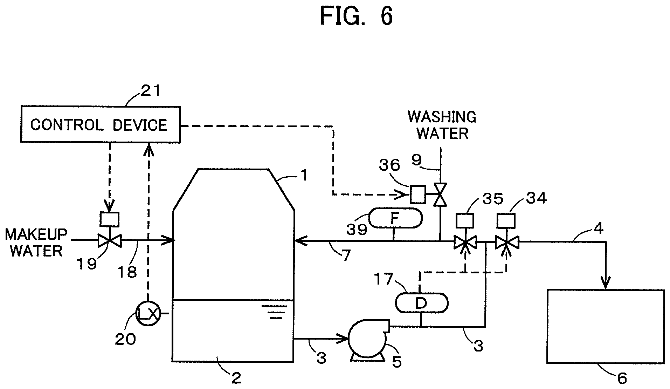

FIG. 6 illustrates a configuration in which the above-described gypsum slurry supply pipe valve 10, the gypsum slurry circulation pipe valve 11 and the washing water pipe valve 12 of FIG. 1 are respectively replaced by adjusting valves 34, 35 and 36, and the flow rate of the gypsum slurry flowing in the circulation pipe 7 is measured by a gypsum slurry flow meter 39 provided in the circulation pipe 7.

As described above, the control valve 34 is provided in the gypsum slurry supply pipe 4, the control valve 35 is provided in the gypsum slurry circulation pipe 7, further the control valve 36 is provided in the washing water pipe 9, and further a flow rate control valve 19 is provided in the makeup water pipe 18, thereby it is possible to accurately control the flow rate in each of the pipes 4, 7, 9 and 18 based on a value measured by the gypsum slurry flow meter 39 provided in the circulation pipe 7.

By this, it is configured that only a target supply amount of the gypsum slurry is supplied to the gypsum slurry tank 6, and the residual slurry is returned to the absorption tower 1 through the gypsum slurry circulation pipe 7. When the amount of the residual slurry is small, and the slurry flow rate in the gypsum slurry circulation pipe 7 is lower than a set value, the slurry flows into the circulation pipe 7 while adjusting the amount of washing water by the washing water pipe adjusting valve 36, thereby the flow rate in the circulation pipe 7 can be maintained. By the above-described configuration, the capacity of the pump 5 may be reduced, while continuously supplying the gypsum slurry to the gypsum slurry circulation pipe 7. However, since the washing water continuously flows into the gypsum slurry circulation pipe 7, there are disadvantages that the water balance in the absorption tower 1 cannot be maintained, and costs are increased due to the control valves 34, 35 and 36 and the flow meter 39 being installed respectively, instead of the gypsum slurry supply pipe valve 10, the gypsum slurry circulation pipe valve 11 and the washing water pipe valve 12 of FIG. 1.

### [Description of Reference Numerals]

1 absorption tower
2 gypsum slurry
3 common pipe
4 gypsum slurry supply pipe
5 gypsum slurry blowdown pump
6 gypsum slurry tank
7 circulation pipe
9 washing water pipe
10, 11, 12 flow passage shutoff valve (flow passage opening/closing valve)
15 flow passage shutoff valve
17 gypsum slurry densimeter
18 makeup water pipe
19 flow rate control valve (flow passage opening/closing valve)
20 liquid level gauge
21 control device
23 hydrocyclone
25 gypsum slurry blow down valve (flow passage opening/closing valve)
26 drain pipe
27 drain valve (flow passage opening/closing valve)
29 drain pit
31 drain supply pipe
32 drain water pump
34, 35, 36 control valve
39 gypsum slurry flow meter

## Claims

1. A method of operating a flue gas desulfurization apparatus, in which a gypsum slurry (2) containing gypsum obtained by bringing sulfur oxides contained in a flue gas discharged from a combustion device including a boiler into contact with an absorbing solution containing a limestone slurry in an absorption tower (1), and oxidizing the same, is extracted from the absorption tower (1), and by using a pump (5), the gypsum slurry (2) is supplied to a gypsum slurry tank (6, 23) for supplying the gypsum slurry (2) to a dehydration equipment, or is circulated to the absorption tower (1), the method **characterized in that** it comprises:
performing an operation of supplying the gypsum slurry (2) only to the gypsum slurry tank (6, 23) and an operation of circulating the gypsum slurry (2) only to the absorption tower (1) by switching therebetween, wherein the switching is controlled depending on a solid content concentration of the gypsum slurry (2), and
when switching to the operation of supplying the gypsum slurry (2) only to the gypsum slurry tank (6, 23), washing a circulation pipe (7) configured to circulate the gypsum slurry (2) to the absorption tower (1),
wherein the gypsum slurry (2) is supplied to the gypsum slurry tank (6, 23) via a gypsum slurry supply pipe (4) having a gradient such that the gypsum slurry (2) flows into the gypsum slurry tank (6, 23) by gravity.

2. The method of operating a flue gas desulfurization apparatus according to claim 1, wherein control of an amount of water in the gypsum slurry (2) flowing from the circulation pipe (7) into the absorption tower (1), during washing the circulation pipe (7) and at the time of switching the operation to the circulation operation, is simultaneously performed with control of an amount of makeup water flowing into the absorption tower (1).

3. A flue gas desulfurization apparatus comprising:
an absorption tower (1);
a gypsum slurry tank (6, 23) configured to extract and store a gypsum slurry (2) generated by bringing sulfur oxides contained in a flue gas and an absorbing solution containing a limestone slurry into contact with each other in the absorption tower (1);
a gypsum slurry common pipe (3) configured to convey the gypsum slurry (2) extracted from the absorption tower (1);
a gypsum slurry supply pipe (4) connected to the gypsum slurry common pipe (3) and configured to supply the gypsum slurry (2) to the gypsum slurry tank (6, 23) by gravity, the gypsum slurry supply pipe (4) having a gradient;
a gypsum slurry circulation pipe (7) configured to circulate and supply the gypsum slurry (2) provided at a connection part between the gypsum slurry common pipe (3) and the gypsum slurry supply pipe (4) to the absorption tower (1) ;
a washing water pipe (9) connected to the gypsum slurry circulation pipe (7) to supply washing water to the gypsum slurry circulation pipe (7);
a flow passage opening/closing valve (10) provided in the gypsum slurry supply pipe (4);
a flow passage opening/closing valve (11) provided in the gypsum slurry circulation pipe (7);
a flow passage opening/closing valve (12) provided in the washing water pipe (9);
a makeup water pipe (18) configured to supply makeup water to the absorption tower (1);
a flow passage opening/closing valve (19) provided in the makeup water pipe (18); and
a liquid level gauge (20) configured to measure a liquid level of the gypsum slurry (2) in the absorption tower (1), the apparatus further comprising:
a gypsum slurry pump (5) configured to feed the gypsum slurry (2) to the gypsum slurry supply pipe (4) side and a gypsum slurry densimeter (17), which are respectively provided in the gypsum slurry common pipe (3); and
a control device (21) configured to control opening/closing of the flow passage opening/closing valves (10, 11, 12, 19) based on values measured by the gypsum slurry densimeter (17) and the liquid level gauge (20).

4. The flue gas desulfurization apparatus according to claim 3, wherein all the flow passage opening/closing valves (10, 11, 12, 19) are provided as a flow rate adjusting valve.

5. A flue gas desulfurization apparatus comprising:
an absorption tower (1);
a gypsum slurry tank (6, 23) configured to extract and store a gypsum slurry (2) generated by bringing sulfur oxides contained in a flue gas and an absorbing solution containing a limestone slurry into contact with each other in the absorption tower (1);
a gypsum slurry common pipe (3) configured to convey the gypsum slurry (2) extracted from the absorption tower (1);
a gypsum slurry supply pipe (4) connected to the gypsum slurry common pipe (3) and configured to supply the gypsum slurry (2) to the gypsum slurry tank (6, 23) by gravity, the gypsum slurry supply pipe (4) having a gradient;
a washing water pipe (9) configured to supply washing water to the gypsum slurry common pipe (3) on an upstream side from a connection part with the gypsum slurry supply pipe (4);
a flow passage opening/closing valve (12) provided in the washing water pipe (9);
a flow passage opening/closing valve (25) provided in the gypsum slurry common pipe (3);
a flow passage opening/closing valve (10) provided in the gypsum slurry supply pipe (4); and
a gypsum slurry pump (5) configured to feed the gypsum slurry to the gypsum slurry supply pipe (4) side and a gypsum slurry densimeter (17), which are provided in the gypsum slurry common pipe (3), the apparatus further comprising:
a drain pipe (26) connected to the upstream side of the gypsum slurry common pipe (3) from the connection part with the gypsum slurry supply pipe (4);
a pipe flow passage opening/closing valve (27) provided in the drain pipe (26);
a drain pit (29) into which drain containing the gypsum slurry (2) from the drain pipe (26) flows;
a drain supply pipe (31) configured to supply the drain from the drain pit (29) to the absorption tower (1);
a drain water pump (32) provided in the drain supply pipe (31);
a makeup water pipe (18) configured to supply makeup water to the absorption tower (1);
a flow passage opening/closing valve (19) provided in the makeup water pipe (18);
a liquid level gauge (20) provided in the absorption tower (1) to measure a liquid level of the gypsum slurry (2) therein; and
a control device (21) configured to control opening/closing of the pipe flow passage opening/closing valves (10, 12, 19, 25, 27) based on values measured by the gypsum slurry densimeter (17) and the liquid level gauge (20) .

## Patentansprüche

1. Verfahren zum Betreiben einer Rauchgasentschwefelungsvorrichtung, bei welchem eine Gips enthaltende Gipsaufschlämmung (2), die durch Inkontaktbringen von Schwefeloxiden eines Rauchgases, welches aus einer einen Verdampfer umfassenden Verbrennungsvorrichtung ausgestoßen wird, mit einer eine Kalksteinaufschlämmung enthaltenden Absorptionslösung in einem Absorptionsturm (1) sowie Oxidieren derselben erhalten worden ist, aus dem Absorptionsturm (1) abgezogen wird, und die Gipsaufschlämmung (2) unter Verwendung einer Pumpe (5) entweder einem Gipsaufschlämmungsbehälter (6, 23) zugeführt wird, um die Gipsaufschlämmung (2) einer Entwässerungsapparatur zuzuführen, oder zum Absorptionsturm (1) zirkuliert wird, wobei das Verfahren **dadurch gekennzeichnet ist, dass** es umfasst:
das Ausführen eines Betriebs, in welchem die Gipsaufschlämmung (2) ausschließlich dem Gipsaufschlämmungsbehälter (6, 23) zugeführt wird, und eines Betriebs, in welchem die Gipsaufschlämmung (2) ausschließlich zum Absorptionsturm (1) zirkuliert wird, durch Umschalten hierzwischen, wobei das Umschalten in Abhängigkeit von der Feststoffgehaltskonzentration der Gipsaufschlämmung (2) gesteuert wird, und,
wenn auf den Betrieb umgeschaltet wird, in welchem die Gipsaufschlämmung (2) ausschließlich dem Gipsaufschlämmungsbehälter (6, 23) zugeführt wird, das Waschen einer Zirkulationsleitung (7), welche derart konzipiert ist, dass sie die Gipsaufschlämmung (2) zum Absorptionsturm (1) zirkuliert,
wobei die Gipsaufschlämmung (2) dem Gipsaufschlämmungsbehälter (6, 23) derart über eine ein Gefälle aufweisende Gipsaufschlämmungszuführleitung (4) zugeführt wird, dass die Gipsaufschlämmung (2) mithilfe der Schwerkraft in den Gipsaufschlämmungsbehälter (6, 23) strömt.

2. Verfahren zum Betreiben einer Rauchgasentschwefelungsvorrichtung gemäß Anspruch 1, wobei während des Waschens der Zirkulationsleitung (7) und zum Zeitpunkt des Umschaltens des Betriebs auf Zirkulationsbetrieb gleichzeig eine Steuerung der Menge an Wasser in der aus der Zirkulationsleitung (7) in den Absorptionsturm (1) strömenden Gipsaufschlämmung (2) und eine Steuerung der in den Absorptionsturm (1) strömenden Menge an Frischwasser vorgenommen wird.

3. Rauchgasentschwefelungsvorrichtung, umfassend:
einen Absorptionsturm (1);
einen Gipsaufschlämmungsbehälter (6, 23), welcher derart konzipiert ist, dass er eine Gipsaufschlämmung (2), die durch Inkontaktbringen von Schwefeloxiden eines Rauchgases mit einer eine Kalksteinaufschlämmung enthaltenden Absorptionslösung in dem Absorptionsturm (1) erzeugt worden ist, abzieht und speichert;
eine Gipsaufschlämmungsstammleitung (3), welche derart konzipiert ist, dass sie die aus dem Absorptionsturm (1) abgezogene Gipsaufschlämmung (2) transportiert;
eine Gipsaufschlämmungszuführleitung (4), welche mit der Gipsaufschlämmungsstammleitung (3) verbunden und derart konzipiert ist, dass sie die Gipsaufschlämmung (2) dem Gipsaufschlämmungsbehälter (6, 23) mithilfe der Schwerkraft zuführt, wobei die Gipsaufschlämmungszuführleitung (4) ein Gefälle aufweist;
eine Gipsaufschlämmungszirkulationsleitung (7), welche derart konzipiert ist, dass sie die an einem Verbindungsteil zwischen der Gipsaufschlämmungsstammleitung (3) und der Gipsaufschlämmungszuführleitung (4) bereitgestellte Gipsaufschlämmung (2) zirkuliert und dem Absorptionsturm (1) zuführt;
eine Waschwasserleitung (9), welche mit der Gipsaufschlämmungszirkulationsleitung (7) verbunden ist, um der Gipsaufschlämmungszirkulationsleitung (7) Waschwasser zuzuführen;
ein Strömungsdurchlass-Öffnungs-/Schließventil (10), welches in der Gipsaufschlämmungszuführleitung (4) bereitgestellt ist;
ein Strömungsdurchlass-Öffnungs-/Schließventil (11), welches in der Gipsaufschlämmungszirkulationsleitung (7) bereitgestellt ist;
ein Strömungsdurchlass-Öffnungs-/Schließventil (12), welches in der Waschwasserleitung (9) bereitgestellt ist;
eine Frischwasserleitung (18), welche derart konzipiert ist, dass sie dem Absorptionsturm (1) Frischwasser zuführt;
ein Strömungsdurchlass-Öffnungs-/Schließventil (19), welches in der Frischwasserleitung (18) bereitgestellt ist; und
ein Flüssigkeitspegelmessgerät (20), welches derart konzipiert ist, dass es einen Flüssigkeitspegel der Gipsaufschlämmung (2) in dem Absorptionsturm (1) misst, wobei die Vorrichtung weiterhin umfasst:
eine Gipsaufschlämmungspumpe (5), welche derart konzipiert ist, dass sie die Gipsaufschlämmung (2) dem Abschnitt der Gipsaufschlämmungszuführleitung (4) sowie einem Gipsaufschlämmungsdichtemessgerät (17) zuleitet, wobei letztere jeweils in der Gipsaufschlämmungsstammleitung (3) bereitgestellt sind; und
eine Steuervorrichtung (21), welche derart konzipiert ist, dass sie das Öffnen/Schließen der Strömungsdurchlass-Öffnungs-/Schließventile (10, 11, 12, 19) auf Grundlage von Werten steuert, die mithilfe des Gipsaufschlämmungsdichtemessgeräts (17) und des Flüssigkeitspegelmessgeräts (20) gemessen werden.

4. Rauchgasentschwefelungsvorrichtung gemäß Anspruch 3, wobei sämtliche Strömungsdurchlass-Öffnungs-/Schließventile (10, 11, 12, 19) als Strömungsgeschwindigkeitseinstellventil bereitgestellt sind.

5. Rauchgasentschwefelungsvorrichtung, umfassend:
einen Absorptionsturm (1);
einen Gipsaufschlämmungsbehälter (6, 23), welcher derart konzipiert ist, dass er eine Gipsaufschlämmung (2), die durch Inkontaktbringen von Schwefeloxiden eines Rauchgases mit einer eine Kalksteinaufschlämmung enthaltenden Absorptionslösung in dem Absorptionsturm (1) erzeugt worden ist, abzieht und speichert;
eine Gipsaufschlämmungsstammleitung (3), welche derart konzipiert ist, dass sie die aus dem Absorptionsturm (1) abgezogene Gipsaufschlämmung (2) transportiert;
eine Gipsaufschlämmungszuführleitung (4), welche mit der Gipsaufschlämmungsstammleitung (3) verbunden und derart konzipiert ist, dass sie die Gipsaufschlämmung (2) dem Gipsaufschlämmungsbehälter (6, 23) mithilfe der Schwerkraft zuführt, wobei die Gipsaufschlämmungszuführleitung (4) ein Gefälle aufweist;
eine Waschwasserleitung (9), welche derart konzipiert ist, dass sie der Gipsaufschlämmungsstammleitung (3) in einem stromaufwärts eines Verbindungsteils mit der Gipsaufschlämmungszuführleitung (4) gelegenen Abschnitt Waschwasser zuführt;
ein Strömungsdurchlass-Öffnungs-/Schließventil (12), welches in der Waschwasserleitung (9) bereitgestellt ist;
ein Strömungsdurchlass-Öffnungs-/Schließventil (25), welches in der Gipsaufschlämmungsstammleitung (3) bereitgestellt ist;
ein Strömungsdurchlass-Öffnungs-/Schließventil (10), welches in der Gipsaufschlämmungszuführleitung (4) bereitgestellt ist;
eine Gipsaufschlämmungspumpe (5), welche derart konzipiert ist, dass sie die Gipsaufschlämmung dem Abschnitt der Gipsaufschlämmungszuführleitung (4) sowie einem Gipsaufschlämmungsdichtemessgerät (17) zuleitet, wobei letztere in der Gipsaufschlämmungsstammleitung (3) bereitgestellt sind, und wobei die Vorrichtung weiterhin umfasst:
eine Ablaufleitung (26), welche mit dem stromaufwärts des Verbindungsteils mit der Gipsaufschlämmungszuführleitung (4) gelegenen Abschnitt der Gipsaufschlämmungsstammleitung (3) verbunden ist;
ein Leitungsströmungsdurchlass-Öffnungs-/Schließventil (27), welches in der Ablaufleitung (26) bereitgestellt ist;
eine Ablaufgrube (29), in welche ein die Gipsaufschlämmung (2) enthaltender Ablauf aus der Ablaufleitung (26) strömt;
eine Ablaufzuführleitung (31), welche derart konzipiert ist, dass sie den in der Ablaufgrube (29) befindlichen Ablauf dem Absorptionsturm (1) zuführt;
eine Ablaufwasserpumpe (32), welche in der Ablaufzuführleitung (31) bereitgestellt ist;
eine Frischwasserleitung (18), welche derart konzipiert ist, dass sie dem Absorptionsturm (1) Frischwasser zuführt;
ein Strömungsdurchlass-Öffnungs-/Schließventil (19), welches in der Frischwasserleitung (18) bereitgestellt ist;
ein Flüssigkeitspegelmessgerät (20), welches in dem Absorptionsturm (1) bereitgestellt ist, um hierin einen Flüssigkeitspegel der Gipsaufschlämmung (2) zu messen; und
eine Steuervorrichtung (21), welche derart konzipiert ist, dass sie das Öffnen/Schließen der Strömungsdurchlass-Öffnungs-/Schließventile (10, 12, 19, 25, 27) auf Grundlage von Werten steuert, die mithilfe des Gipsaufschlämmungsdichtemessgeräts (17) und des Flüssigkeitspegelmessgeräts (20) gemessen werden.

## Revendications

1. Procédé de fonctionnement d'un appareil de désulfuration de gaz de combustion, dans lequel une boue de gypse (2) contenant du gypse obtenue en amenant les oxydes de soufre contenus dans un gaz de combustion évacué d'un dispositif de combustion comprenant une chaudière en contact avec une solution d'absorption contenant une boue de calcaire dans une tour d'absorption (1), et en oxydant celle-ci, est extraite de la tour d'absorption (1), et, à l'aide d'une pompe (5), la boue de gypse (2) est fournie à une cuve de boue de gypse (6, 23) afin de fournir la boue de gypse (2) à un équipement de déshydratation, ou est mise en circulation vers la tour d'absorption (1), le procédé étant **caractérisé en ce qu'**il comprend :
l'exécution d'une opération de fourniture de la boue de gypse (2) uniquement à la cuve de boue de gypse (6, 23) et d'une opération de mise en circulation de la boue de gypse (2) uniquement vers la tour d'absorption (1) en basculant entre celles-ci, dans lequel le basculement est contrôlé en fonction d'une concentration en solides de la boue de gypse (2), et
lors du passage à l'opération de fourniture de la boue de gypse (2) uniquement à la cuve de boue de gypse (6, 23), le lavage d'une conduite de circulation (7) configurée pour faire circuler la boue de gypse (2) vers la tour d'absorption (1),
dans lequel la boue de gypse (2) est fournie à la cuve de boue de gypse (6, 23) via une conduite d'alimentation en boue de gypse (4) ayant un gradient de sorte que la boue de gypse (2) s'écoule vers la cuve de boue de gypse (6, 23) par gravité.

2. Procédé de fonctionnement d'un appareil de désulfuration de gaz de combustion selon la revendication 1, dans lequel le contrôle d'une quantité d'eau dans la boue de gypse (2) qui circule de la conduite de circulation (7) vers la tour d'absorption (1), pendant le lavage de la conduite de circulation (7) et au moment du passage à l'opération de circulation, est effectué en même temps que le contrôle d'une quantité d'eau d'appoint qui circule vers la tour d'absorption (1).

3. Appareil de désulfuration de gaz de combustion comprenant :
une tour d'absorption (1) ;
une cuve de boue de gypse (6, 23) configurée pour extraire et stocker une boue de gypse (2) générée en amenant les oxydes de soufre contenus dans un gaz de combustion et une solution d'absorption contenant une boue de calcaire en contact mutuel dans la tour d'absorption (1) ;
une conduite commune de boue de gypse (3) configurée pour acheminer la boue de gypse (2) extraite de la tour d'absorption (1) ;
une conduite d'alimentation en boue de gypse (4) reliée à la conduite commune de boue de gypse (3) et configurée pour fournir la boue de gypse (2) à la cuve de boue de gypse (6, 23) par gravité, la conduite d'alimentation en boue de gypse (4) ayant un gradient ;
une conduite de circulation de boue de gypse (7) configurée pour faire circuler et fournir la boue de gypse (2), prévue au niveau d'une partie de raccordement entre la conduite commune de boue de gypse (3) et la conduite d'alimentation en boue de gypse (4), vers la tour d'absorption (1) ;
une conduite d'eau de lavage (9) reliée à la conduite de circulation de boue de gypse (7) pour fournir de l'eau de lavage à la conduite de circulation de boue de gypse (7) ;
une soupape d'ouverture/de fermeture de passage d'écoulement (10) prévue dans la conduite d'alimentation en boue de gypse (4) ;
une soupape d'ouverture/de fermeture de passage d'écoulement (11) prévue dans la conduite de circulation de boue de gypse (7) ;
une soupape d'ouverture/de fermeture de passage d'écoulement (12) prévue dans la conduite d'eau de lavage (9) ;
une conduite d'eau d'appoint (18) configurée pour fournir de l'eau d'appoint à la tour d'absorption (1) ;
une soupape d'ouverture/de fermeture de passage d'écoulement (19) prévue dans la conduite d'eau d'appoint (18) ; et
une jauge de niveau de liquide (20) configurée pour mesurer un niveau de liquide de la boue de gypse (2) dans la tour d'absorption (1), l'appareil comprenant en outre :
une pompe à boue de gypse (5) configurée pour fournir la boue de gypse (2) à la conduite d'alimentation en boue de gypse (4) et un densimètre de boue de gypse (17), qui sont respectivement prévus dans la conduite commune de boue de gypse (3) ; et
un dispositif de commande (21) configuré pour contrôler l'ouverture/la fermeture des soupapes d'ouverture/de fermeture de passage d'écoulement (10, 11, 12, 19) sur la base de valeurs mesurées par le densimètre de boue de gypse (17) et la jauge de niveau de liquide (20).

4. Appareil de désulfuration de gaz de combustion selon la revendication 3, dans lequel toutes les soupapes d'ouverture/de fermeture de passage d'écoulement (10, 11, 12, 19) sont prévues comme une soupape de régulation de débit.

5. Appareil de désulfuration de gaz de combustion comprenant :
une tour d'absorption (1) ;
une cuve de boue de gypse (6, 23) configurée pour extraire et stocker une boue de gypse (2) générée en amenant les oxydes de soufre contenus dans un gaz de combustion et une solution d'absorption contenant une boue de calcaire en contact mutuel dans la tour d'absorption (1) ;
une conduite commune de boue de gypse (3) configurée pour acheminer la boue de gypse (2) extraite de la tour d'absorption (1) ;
une conduite d'alimentation en boue de gypse (4) reliée à la conduite commune de boue de gypse (3) et configurée pour fournir la boue de gypse (2) à la cuve de boue de gypse (6, 23) par gravité, la conduite d'alimentation en boue de gypse (4) ayant un gradient ;
une conduite d'eau de lavage (9) configurée pour fournir de l'eau de lavage à la conduite commune de boue de gypse (3) sur un côté amont depuis une partie de raccordement avec la conduite d'alimentation en boue de gypse (4) ;
une soupape d'ouverture/de fermeture de passage d'écoulement (12) prévue dans la conduite d'eau de lavage (9) ;
une soupape d'ouverture/de fermeture de passage d'écoulement (25) prévue dans la conduite commune de boue de gypse (3) ;
une soupape d'ouverture/de fermeture de passage d'écoulement (10) prévue dans la conduite d'alimentation en boue de gypse (4) ; et
une pompe à boue de gypse (5) configurée pour fournir la boue de gypse à la conduite d'alimentation en boue de gypse (4) et un densimètre de boue de gypse (17), qui sont prévus dans la conduite commune de boue de gypse (3), l'appareil comprenant en outre :
une conduite de vidange (26) reliée au côté amont de la conduite commune de boue de gypse (3) depuis la partie de raccordement avec la conduite d'alimentation en boue de gypse (4) ;
une soupape d'ouverture/de fermeture de passage d'écoulement (27) prévue dans la conduite de vidange (26) ;
une fosse de vidange (29) dans laquelle la vidange qui contient la boue de gypse (2) issue de la conduite de vidange (26) s'écoule ;
une conduite d'alimentation de vidange (31) configurée pour fournir la vidange qui provient de la fosse de vidange (29) à la tour d'absorption (1) ;
une pompe à eau de vidange (32) prévue dans la conduite d'alimentation de vidange (31) ;
une conduite d'eau d'appoint (18) configurée pour fournir de l'eau d'appoint à la tour d'absorption (1) ;
une soupape d'ouverture/de fermeture de passage d'écoulement (19) prévue dans la conduite d'eau d'appoint (18) ;
une jauge de niveau de liquide (20) prévue dans la tour d'absorption (1) afin de mesurer un niveau de liquide de la boue de gypse (2) à l'intérieur; et
un dispositif de commande (21) configuré pour contrôler l'ouverture/la fermeture des soupapes d'ouverture/de fermeture de passage d'écoulement (10, 12, 19, 25, 27) sur la base de valeurs mesurées par le densimètre de boue de gypse (17) et la jauge de niveau de liquide (20).
